# EUROPEAN PATENT SPECIFICATION

(11) **EP 4 437 258 B1**
(45) Date of publication and mention of the grant of the patent: **20.05.2026**
(21) Application number: 22821688.3
(22) Date of filing: 25.11.2022
(51) Int. Cl.: F16L 25/01, H05F 3/02

(54) **LOCAL GAS EXTRACTOR WITH A GROUNDING DEVICE AND A METHOD FOR MOUNTING SUCH A GROUNDING DEVICE**
LOKALER GASEXTRAKTOR MIT EINER ERDUNGSVORRICHTUNG UND VERFAHREN ZUR MONTAGE SOLCH EINER ERDUNGSVORRICHTUNG
PURGEUR DE GAZ LOCAL DOTÉ D'UN DISPOSITIF DE MISE À LA TERRE ET PROCÉDÉ DE MONTAGE D'UN TEL DISPOSITIF DE MISE À LA TERRE

(30) Priority: 26.11.2021 SE 2151442
(43) Date of publication of application: 02.10.2024
(73) Proprietor: FUMEX AB, 931 92 Skellefteå (SE)
(72) Inventor: HEDLUND, Lars, 931 91 Skellefteå (SE); STENBERG, Gustav, 931 42 Skellefteå (SE)
(74) Representative: Zacco Sweden AB
(86) International application number: PCT/SE2022/051103
(87) International publication number: WO 2023/096564

(56) References cited:
- EP-A1- 0 122 780
- WO-A2-2011/121554
- FR-A1- 2 628 573
- US-A1- 2010 320 758

## Description

### TECHNICAL FIELD

The present disclosure relates to a local gas extractor comprising a grounding device and a method for mounting such a grounding device according to the appended claims.

### BACKGROUND ART

Local gas extractor arrangements are used in plurality of facilities and technical fields. A local gas extractor may in general be perceived as a vacuum cleaner for pneumatic transportation of various particles. The local gas extractor device may be fixedly assembled in a facility and typically comprises a support arm arrangement holding a tubing, which is connected to a pump device. The support arm arrangement is typically configured to enable adjustment of the position of the tubing depending on the requirements for said facility. The tubing is flexible and may comprise polymeric material with a helical coil spring for stability.

Depending on which technical field such a gas extractor arrangement is to be used, the requirements of its technical features, its shape and design, may vary. A local gas extractor to be used for extraction of welding gases in a metal workshop will naturally require different properties compared to a local gas extractor that is used in a clean laboratory environment for example.

Clean environments will bring forth distinct requirements stemming from a need for cleanliness. Examples of such environments is laboratories, chemical and petrochemical industries, gas distribution, paint and pharmaceutical industries, as well as fields related to food, such as restaurants, food industrial facilities or similar. Local gas extractor arrangements for such facilities and environments may thus be subjected to much higher demands and requirements compared to other industrial applications. There are many different factors to consider when striving for a clean, and easy to keep clean, local gas extractor arrangement. Movability and weight, overall design and design of small details, chosen materials, surface finish, and electrical conductivity are some variables, and such variables may not always point in the same direction when it comes to design of such a device or arrangement.

Some environments require so called ATEX-classified products. ATEX is directives describing the minimum safety requirements for workplaces and equipment used in explosive atmospheres. For local gas extractors, static electricity generated in the tubing may cause electrostatic discharge. This is considered an effective ignition source within the ATEX direction and therefore has to be diverted to an earth connection to fulfil the ATEX requirements. Today, hose clamps with grounding cables are typically used for diverting static electricity being build up in a tubing connected to a duct. However, such solutions involves multiple components including screws and holes, which are not optimal with regard to cleanliness.

Document EP 0 122 780 A1 discloses a wire-slot type electrical terminal intended for mating with a terminal tab.

There is thus a need for an improved grounding device for a local gas extractor, which alleviates problems related to usage of such devices and arrangements for example in clean ATEX environments.

### SUMMARY OF THE INVENTION

It is an object of the present disclosure to mitigate, alleviate or eliminate one or more of the deficiencies and disadvantages in the prior art and solve at least one of the current problems.

It is a particular object of the present disclosure to provide a grounding device, which is adapted for use in clean environments and thus is easy to keep clean. Another object of the present disclosure is to provide a grounding device, which is safe, easy to install and cost-efficient.

Yet another object of the present disclosure is to provide a local gas extractor with such a grounding device and a method for mounting such a grounding device in a local gas extractor, and thereby ensure safe diversion of electricity.

According to a first aspect of the present disclosure, a grounding device for a local gas extractor is provided. The grounding device is configured to interconnect a tubing, a conductive duct and a coupling element of the local gas extractor to divert static electricity, the tubing comprising a metal wire, wherein the grounding device comprises a conductive body with: a head section configured to interact with a part of the metal wire of the tubing; and a connection section configured to be arranged on the tubing in abutment with the duct and the coupling element.

In a local gas extractor arrangement, a tubing is typically connected to a duct by means of a coupling element. The duct and the coupling element are conductive and the tubing may be a dissipative tubing. During pneumatic transport of debris and gas through the tubing, static electricity may be generated. This is not desired and may even constitute a high risk specifically in explosive atmospheres (ATEX environments). The static electricity therefore has to be diverted to an earth connection and this may be accomplished by electrically connecting the tubing and the duct. Furthermore, with a non-conductive tubing arranged between a conductive duct and a conductive coupling element, such arrangement could involuntary become a sort of capacitor/condenser. Thus, the coupling element could start storing electrical energy, which would be very disadvantageous. To avoid this scenario, the coupling element should also be electrically connected to the duct and the tubing. One known way of electrically connecting the duct, the tubing and the coupling element is to expose a long section of the tubing wire and fold/bend the wire in multiple directions, such that it is in abutment with the duct and the coupling element. This is time consuming and complex and is not as reliable as using the grounding device according to the present disclosure. By means of the grounding device according to the present disclosure, the tubing, the duct and the coupling element will be electrically connected in a simple way, and the risk for electric shocks or electrostatic discharge is thereby reduced. The grounding device according to the present disclosure is thus advantageous to use in ATEX environments. By means of the grounding device, the wire of the tubing will interact with the head section of the grounding device and a reliable connection between the tubing and the grounding device is thereby achieved. Furthermore, the connection section of the grounding device is arranged in abutment with the duct and the coupling element, thereby electrically connecting the tubing, the duct and the coupling element. This way, a safe and reliable diversion of electricity is achieved. The configuration/shape of the grounding device does not require any external fasteners or invasive actions to mount the grounding device in contact with the conductive components, which makes it adapted for use in clean environments and is easy to keep clean. Furthermore, the grounding device according to the present disclosure being formed as a single unit makes it easy to install, easy to manufacture and cost-efficient.

The head section may comprise an aperture for receiving a part of the metal wire of the tubing. A part of the metal wire may thus be configured to be inserted into the head section. The head section may be hollow and the aperture may thus be a through hole. The aperture may also be referred to as a cavity. Alternatively, the head section comprises a groove for receiving a part of the metal wire. That is, the aperture/cavity may be formed as a groove. The head section may thus be configured to at least partly encircle a part of the metal wire. The head section may be configured to circumferentially engage/abut a part of the metal wire. The head section comprising an aperture facilitates mounting of the grounding device by acting as a guiding means when mounting the grounding device on the tubing. The head section at least partly encircling the metal wire also helps retaining the grounding device in an accurate position.

In some examples, the head section has a length of 2-10 millimetres and is configured to receive a corresponding length of the metal wire. Thus, the aperture/groove/through hole of the head section may be between 2-10 millimetres long and be configured to receive a corresponding length of the metal wire.

It is to be understood that even though the grounding device is mainly described in relation to components in a local gas extractor arrangement, the grounding device could be used for electricity diversion in any application involving a tubing, a conductive duct and a conductive coupling element connecting the tubing and the duct.

The duct may comprise a damper device, a nozzle device or a connection to a pump device. The duct may form part of a support arm arrangement of a local gas extractor arrangement. The duct may be referred to as a suction channel, conduit or passage and could thus be any such part of a local gas extractor arrangement. The duct may be configured to be arranged at a first end of the tubing, the first end being the end where the gas/debris is entering the tubing. Alternatively, the duct may be configured to be arranged at a second end of the tubing, the second end being closest to/connected to a pump device. According to another example, the duct may be configured to be arranged somewhere between the first end and the second end of the tubing.

The tubing may be a flexible tubing. Alternatively, the tubing may be rigid or semi rigid. The tubing may be a dissipative tubing. The tubing may comprise plastics, such as a polymeric material. In one example, the tubing comprises polyurethane or more specifically an ether-based polyurethane. The tubing may comprise a helix of metal wire (wire spiral), arranged circumferentially along at least a part of the length of the tubing. The metal helix and thus the metal wire may comprise stainless steel. The tubing may also be referred to as a hose or a duct hose.

The coupling element may be referred to as a hose clamp or band clamp. The coupling element may thus comprise a strap or a band. The coupling element may be configured to at least partly surround/encircle the tubing and the duct. Alternatively, the coupling element comprises a snap fit connection or any other mechanical connection for connecting the tubing and the duct.

The head section may have a length corresponding to a width of the connection section. The longitudinal extension of the connection section is essentially perpendicular to the longitudinal extension of the head section. The grounding device is configured to be arranged on the tubing such that the longitudinal extension of the connection section is parallel with the longitudinal extension of the tubing. Thus, when the grounding device is mounted on the tubing, the longitudinal extension of the head section is essentially perpendicular to the longitudinal extension of the tubing.

In one example, the connection section of the grounding device comprises a first leg and a second leg, configured to be arranged on opposite sides of the tubing wall. This way, the grounding device can easily be mounted on the tubing. When the grounding device is mounted on the tubing, the first leg and the second leg may be arranged essentially in parallel. The longitudinal extension of the first and second leg extends in parallel with the longitudinal extension of the tubing when the grounding device is mounted on the tubing. The first leg and the second leg may each comprise a first end and a second end, and the longitudinal extension of each leg extends between the first and second end. The first leg and the second leg may both have a length that is equal to, or longer than, the width of the coupling element. This way, arranging the coupling element in abutment with the connection section of the grounding device is facilitated. The first leg and the second leg may be connected at a connection point at a first end of the connection section. More specifically, the first end of the first leg and the first end of the second leg are connected at a connection point at a first end of the connection section. The first leg and the second leg may be bent towards each other at the first end. The first end of the connection section may thus comprise a curved outer wall and a curved inner wall. The first end of the connection section may have a semi-cylindrical shape. The connection section may be referred to as being U-shaped. The inner diameter of the first end typically correspond to the thickness of the tubing wall on which the grounding device is to be mounted. The inner diameter of the first end of the grounding device may correspond to the diameter of the metal wire embedded in the plastic material of the tubing. The connection section may be connected to the head section in association with the connection point. The grounding device may comprise a neck section connecting the head section and the connection section.

The first leg and the second leg may be arranged essentially in parallel at a distance from each other. In a natural/unaffected state, the distance is suitably greater than the thickness of the tubing wall on which the grounding device should be mounted. The distance between the legs may increase from the first end of the legs towards the second end of the legs. More specifically, the distance between the first ends of the legs may be smaller than the distance between the second ends of the legs.

The connection section may be referred to as a clamping section, configured to be clamped on the tubing. The connection section may be configured to be clamped on the tubing by means of the coupling element.

The first leg may be configured to be arranged on an inside of the tubing and in abutment with a part of the duct inserted into the tubing, and the second leg may be configured to be arranged on an outside of the tubing in abutment with the coupling element. The inside of the tubing is where the gas and debris is transported. In a local gas extractor arrangement, the duct may be at least partly inserted into an end of the tubing and the tubing and the duct are connected/retained together by fastening the coupling element around the tubing and the duct. The grounding device according to the present disclosure may be configured to be arranged with the first leg inserted into the tubing at the end of the tubing, thereby abutting an inner wall of the tubing and an outer wall of the duct. More specifically, an inner surface of the first leg may abut, or at least face, the inner wall of the tubing, and an outer surface of the first leg will abut the outer wall of the duct. The grounding device is further configured to be arranged with the second leg on the outside of the tubing, such that an inner surface of the second leg may abut, or at least face, the outer wall of the tubing and such that an outer surface of the second leg abuts the coupling element. When the grounding device is mounted on the tubing, the head section extends beyond the tubing clamped by the connection section.

The head section may be substantially cylindrical. When the grounding device is mounted on the tubing, the head section is arranged such that a centre axis of the head section extends essentially perpendicularly to the longitudinal extension of the tubing. The metal wire of the tubing may be formed as a helix/spiral. When mounting the grounding device, a part of the wire at the end of the tubing is exposed. The grounding device is then mounted on the tubing end with the centre axis of the head section in line with the longitudinal extension of the exposed metal wire. The exposed metal wire of the tubing does not have to be bent/folded or deformed in any specific way to be connected to the grounding device, just exposed so that it can interact with an inside of the head section of the grounding device. Mounting the grounding device on the tubing is thereby facilitated.

The head section may have an inner diameter corresponding to the thickness of the metal wire of the tubing. Thus, the aperture, through hole or groove of the head section may have an inner diameter corresponding to the thickness of the metal wire. The inner diameter of the head section may be between 1-4 millimetres.

In some examples, the second leg comprises a retaining portion for retaining the coupling element. The coupling element is configured to be arranged around the tubing and a part of the coupling element will thus abut the second leg of the grounding device. By means of the retaining portion, the coupling element will be more securely arranged in physical contact with the second leg. The retaining portion may comprise a friction surface on an outer surface of the second leg. Such friction surface would help maintaining the coupling element in accurate position on the grounding device. Alternatively, the retaining portion may comprise at least two ridges or protrusions on the outer surface of the second leg. The at least two ridges/protrusions may be arranged at a distance from each other, allowing the coupling element to be arranged between the at least two ridges. The distance between the ridges thus corresponds to the width of the coupling element. According to yet another example, the retaining portion comprises a groove on the outside of the second leg, configured to receive and retain a part of the coupling element. By means of the retaining portion, the coupling element can be held in place and is prevented from being displaced in the longitudinal direction of the connection section, and thereby loose contact with the grounding device.

In some examples, the retaining portion comprises a through hole in the second leg. The through hole forms a gap/space/cavity inside the second leg. By means of the through hole, the connection section is configured to enable the coupling element to be inserted and extend through the second leg and thereby be retained in a very efficient and reliable way. The through hole extends transversely to the longitudinal extension of the connection section. The through hole thus extends longitudinally along the width of the connection section. The through hole may have a width corresponding to the width of the coupling element. The through hole may also have a height corresponding to the thickness of the coupling element. The second leg may be formed as loop or hoop and thereby forming the through hole. The second leg comprising the through hole may be thicker than the first leg.

In a natural, unaffected state of the grounding device, the second leg may be arranged with an angle to the first leg to facilitate mounting of the grounding device on the tubing. The angle may be between 5-45 degrees. The first and second leg may thus diverge from the connection point when the grounding device is in an unaffected state. When the grounding device has been mounted on the tubing, with the second leg on the outside of the tubing, the coupling element will be placed over the second leg and around the tubing. When the coupling element is tightened/secured, the second leg will be pressed downwards in direction towards the first leg. The connection section will thereby be clamped on the tubing. Alternatively, when the grounding device has been mounted on the tubing, with the second leg on the outside of the tubing, the second leg is pressed in direction towards the first leg by means of tongs or similar, at least until the second leg is essentially parallel with the first leg. The second leg may thus be configured to be pressed in direction towards the first leg in order to clamp the ground device on the tubing.

According to the invention, a local gas extractor arrangement is provided. The local gas extractor arrangement comprises a tubing comprising a metal wire; a conductive duct at least partly inserted into the tubing; a coupling element arranged to connect the tubing and the duct; and a grounding device as disclosed herein. The grounding device is arranged such that a part of the metal wire of the tubing is interacting with the head section and such that the connection section is arranged on the tubing in abutment with the duct and the coupling element. The tubing may be connectable to a pump device to extract gas through the tubing.

The local gas extractor arrangement may further comprise a support arm arrangement for holding the tubing and allowing adjustment of the position of the tubing. The support arm arrangement may comprise a first support arm arranged to a plate member provided with means for fixedly attaching said plate member to an exterior surface. The support arm arrangement may further comprise at least one second support arm, wherein each support arm may be pivotally coupled to each other by means of intermediately arranged friction joint arrangements. The tubing may be coupled to the support arms by means of a plurality of retainer devices. The retainer devices may comprise a resilient element, arranged to encircle the tubing to hold the tubing pressed against the support arms. Each retainer device may further comprise a bracket having a shape that conforms with the shape of the support arms. Each bracket may be configured to be coupled to a resilient element.

It is to be understood that all the features relating to the grounding device as disclosed herein, are also applicable on the local gas extractor arrangement. The local gas extractor arrangement thus comprises a tubing comprising a metal wire; a conductive duct at least partly inserted into the tubing; a coupling element arranged around the tubing and the duct; and a grounding device, wherein the grounding device is arranged such that a part of the metal wire of the tubing is inserted inside the head section, and such that a first leg of the connection section is arranged in abutment with the duct inside the tubing and a second leg of the connection section is arranged in abutment with the coupling element.

According to yet another aspect of the present disclosure, a method for mounting a grounding device of a local gas extractor arrangement is provided. The local gas extractor arrangement comprises a tubing with a metal wire; a conductive duct at least partly inserted into the tubing; a coupling element arranged to connect the tubing and the duct; and a grounding device as disclosed herein. The method comprises the steps of: mounting the grounding device on the tubing, such that a part of the metal wire of the tubing is interacting with the head section of the grounding device; inserting a part of the duct inside the tubing in abutment with the connection section of the grounding device; and arranging the coupling element around the tubing and the duct, in abutment with the connection section of the grounding device.

The step of mounting the grounding device on the tubing may comprise exposing a part of the metal wire of the tubing, and mounting the grounding device with at least a part of the exposed wire inserted into the head section of the grounding device. Exposing a part of the metal wire means stripping off the plastic tubing wall from the metal wire. Since the head section of the grounding device has a length between 2-10 millimetres, only around 2-15 millimetres of the metal wire will have to be exposed and at least partly inserted into the head section.

The step of mounting the grounding device on the tubing may also comprise positioning the grounding device, such that the first leg is arranged inside the tubing and the second leg is arranged outside the tubing.

The step of mounting the grounding device on the tubing may further comprise deforming the head section of the grounding device when the metal wire is positioned inside the head section, such that the metal wire is clamped inside the head section. This way, electrical connection between the metal wire and the grounding device is ensured and the grounding device is also firmly retained on the tubing. The deformation of the head section may be performed by means of tongs or any other handheld clamping tool.

The step of arranging the coupling element around the tubing and the duct may comprise tightening the coupling element, such that the connection section of the grounding element is clamped on the tubing. More specifically, the step of arranging the coupling element around the tubing and the duct may comprise tightening the coupling element, such that it applies a force on the second leg of the connection section and presses the second leg against the tubing.

The step of arranging the coupling element around the tubing and the duct may comprise arranging the coupling element, such that a part of the coupling element is retained by a retaining portion of the connection section of the grounding device.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the appended claims.

### BRIEF DESCRIPTION OF THE DRAWINGS

The above objects, as well as additional objects, features and advantages of the present disclosure will be more fully appreciated by reference to the following illustrative and nonlimiting detailed description of example embodiments of the present disclosure, when taken in conjunction with the accompanying drawings, of which:
- Fig. 1a-c: show a grounding device according to examples of the present disclosure;
- Fig. 2a-b: show a grounding device according to an example of the present disclosure;
- Fig. 3a-b: show a grounding device used on a local gas extractor arrangement according to an example of the present disclosure;
- Fig. 4: shows a local gas extractor arrangement according to an example of the present disclosure; and
- Fig. 5: shows an exemplary embodiment of a method for mounting a grounding device according to the present disclosure.

### DETAILED DESCRIPTION

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided merely to fully convey the scope of the disclosure to the skilled person.

It is to be understood that the terminology used herein is for purpose of describing particular embodiments only, and is not intended to be limiting. It should be noted that, as used in the specification and the appended claims, the articles "a", "an", "the", and "said" are intended to mean that there are one or more of the elements unless the context explicitly dictates otherwise. Furthermore, the terms "comprising", "including", "containing" and similar wordings are intended to be open-ended transitional terms that do preclude the possibility of additional elements or steps.

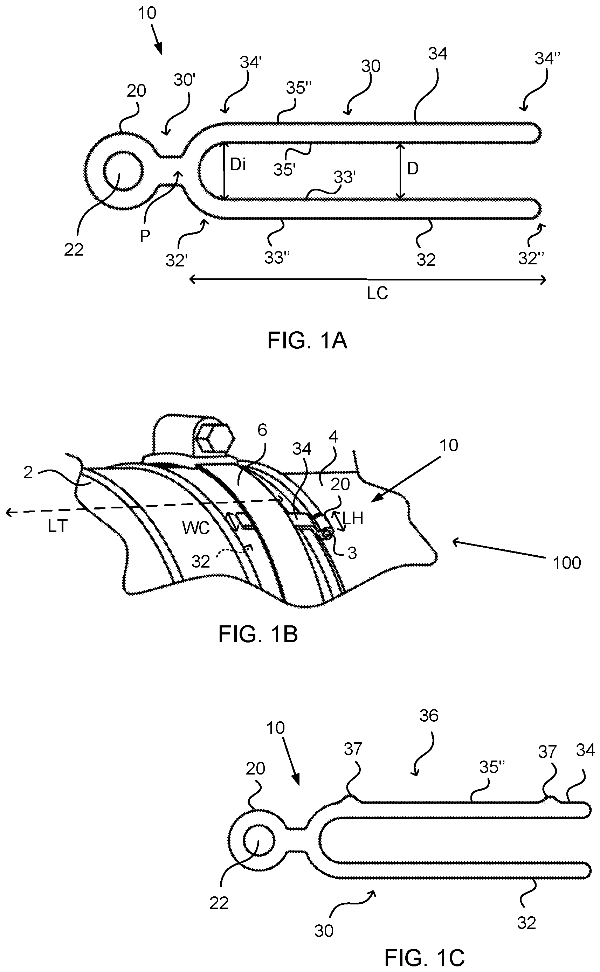

Figures 1a and 1b schematically illustrate a grounding device 10 for a local gas extractor arrangement according to an example of the present disclosure. Figure 1a shows the grounding device 10 alone and figure 1b shows the grounding device 10 arranged in a local gas extractor arrangement 100. The grounding device 10 is configured to interconnect a tubing 2, a conductive duct 4 and a coupling element 6 of the local gas extractor arrangement 100 to divert static electricity. The tubing 2 comprises a metal wire 3. The grounding device 10 comprises a conductive body with a head section 20 configured to interact with a part of the metal wire 3 of the tubing 2; and a connection section 30 configured to be arranged on the tubing 2 in abutment with the duct 4 and the coupling element 6.

The head section 20 comprises an aperture 22 for receiving a part of the metal wire 3 of the tubing 2. The head section 20 is thus configured to at least partly encircle a part of the metal wire 3. As shown in figure 1b, the head section 20 may be hollow and the aperture 22 is a through hole.

The head section 20 may have a length or longitudinal extension LH corresponding to a width WC of the connection section 30. The longitudinal extension LC of the connection section 30 is essentially perpendicular to the longitudinal extension LH of the head section 20. As shown in figure 1b, the grounding device 10 is configured to be arranged on the tubing 2 such that the longitudinal extension LC of the connection section 30 is parallel with the longitudinal extension LT of the tubing 2. Thus, when the grounding device 10 is mounted on the tubing 2, the longitudinal extension LH of the head section is essentially perpendicular to the longitudinal extension LT of the tubing 2.

The connection section 30 of the grounding device 10 may comprise a first leg 32 and a second leg 34, configured to be arranged on opposite sides of the tubing wall. The first leg 32 and the second leg 34 may each comprise a first end 32', 34' and a second end 32", 34". The first leg 32 and the second leg 34 are connected at a connection point P at a first end 30' of the connection section 30. The first leg 32 and the second leg 34 may be arranged essentially in parallel at a distance D from each other. In a natural/unaffected state, the distance D is suitably greater that the thickness of the tubing wall on which the grounding device 10 should be mounted. The first leg 32 and the second leg 34 may diverge from each other from the connection point P. The distance D between the legs 32,34 may thus increase from the first end 32', 34' of the legs towards the second end 32", 34" of the legs. More specifically, the distance D between the first ends 32', 34' of the legs may be smaller than the distance D between the second ends 32", 34" of the legs.

The first end 30' of the connection section 30 may have a semi-cylindrical shape. In the event that the first leg 32 and the second keg 34 are forming a curved first end 30' of the connection section 30, the inner diameter Di of the first end 30' is equal to the distance D between the first end 32' of the first leg 32 and the first end 34' of the second leg 34. The connection section 30 is connected to the head section 20 in association with the connection point P.

As shown in figure 1b, the first leg 32 may be configured to be arranged on an inside of the tubing 2 and in abutment with a part of the duct 4 inserted into the tubing 2, and the second leg 34 may be configured to be arranged on an outside of the tubing 2 in abutment with the coupling element 6. When mounted on the tubing 2, an inner surface 33' of the first leg 32 may abut, or at least face, an inner wall of the tubing 2, and an outer surface 33" of the first leg 32 will abut the outer wall of the duct 4. The grounding device 10 is further configured to be arranged with the second leg 34 on the outside of the tubing 2, such that an inner surface 35' of the second leg 34 may abut, or at least face, the outer wall of the tubing 2 and such that an outer surface 35" of the second leg abuts the coupling element 6.

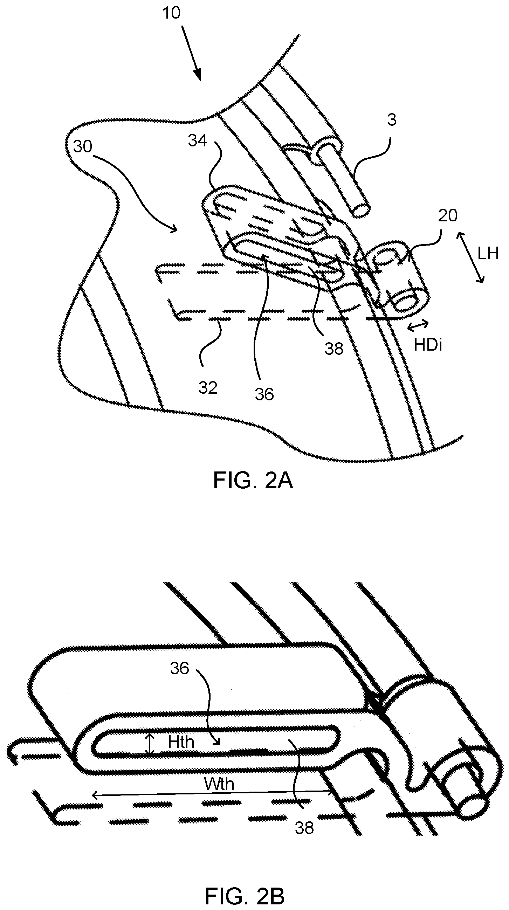

The head section 20 may be substantially cylindrical but could have any shape. The head section 20 may have an inner diameter HDi corresponding to the thickness of the metal wire 3 of the tubing 2. This is shown in figure 2a. More specifically, the aperture 22 of the head section 20 has a diameter, which is larger than the diameter of the metal wire 3.

Figure 1c schematically illustrates a grounding device 10 for a local gas extractor arrangement 100 according to an example of the present disclosure. The grounding device 10 may be configured as disclosed in figure 1a or 1b with the additional feature that the second leg 34 comprises a retaining portion 36 for retaining the coupling element 6. By means of the retaining portion 36, the coupling element 6 will be more securely arranged in physical contact with the second leg 34. The retaining portion 36 may comprise a friction surface on the outer surface 35" of the second leg 34. Additionally or alternatively, the retaining portion 36 may comprise at least two ridges or protrusions 37 on the outer surface 35" of the second leg 34. The at least two ridges/protrusions 37 may be arranged at a distance from each other, allowing the coupling element 6 to be arranged between the at least two ridges 37. The at least two ridges 37 are typically elongated and extends along the width WC of the connection section 30. According to another, not illustrated example, the retaining portion 36 comprises a groove formed on the outside of the second leg 34, configured to receive and retain a part of the coupling element 6.

Figures 2a-b schematically illustrate a grounding device 10 for a local gas extractor arrangement 100 according to an example of the present disclosure. The grounding device 10 may be configured as disclosed in figure 1a or 1b. Figure 2a shows the grounding device 10 during mounting on the tubing 2 and figure 2b shows the grounding device 10 when it has been mounted on the tubing 2.

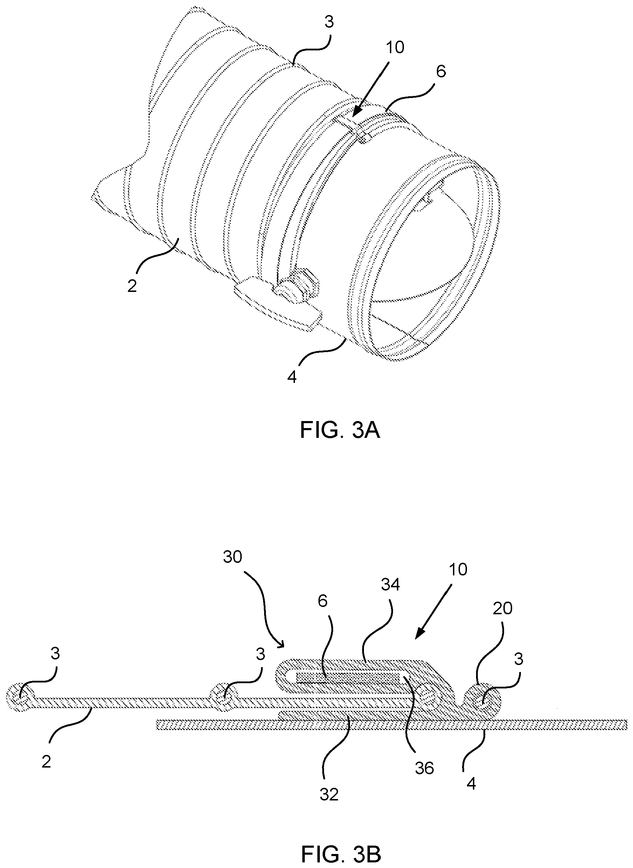

In this example, the retaining portion 36 comprises a through hole 38 in the second leg 34. The through hole 38 forms a gap/space/cavity inside the second leg 34. By means of the through hole 38, the connection section 30 enables the coupling element 6 to be inserted and extend through the second leg 34 and thereby be retained in a very efficient and reliable way. The grounding device 10 arranged in a local gas extractor arrangement 100 with the coupling element 6 inserted through the second leg 34 is shown in figure 3a and 3b. The through hole 38 may have a width Wth corresponding to, or exceeding, the width of the coupling element 6. The through hole 38 may also have a height Hth corresponding to the thickness of the coupling element 6. The length of the through hole 38 corresponds to the width WC of the connection section 30.

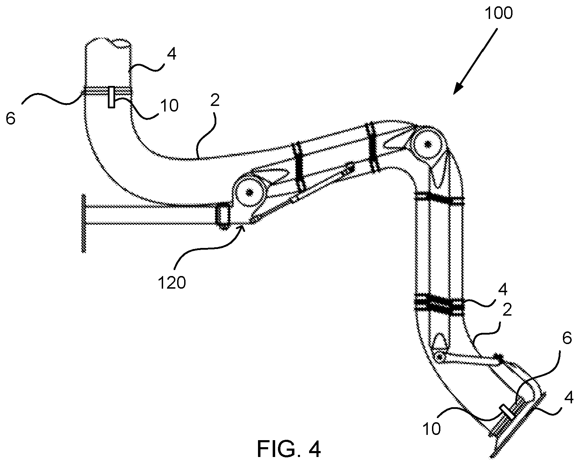

Figure 4 schematically illustrates a local gas extractor arrangement 100 according to an example of the present disclosure. The arrangement 100 comprises a tubing 2, a conductive duct 4 and a coupling element 6 connecting the tubing 2 and the duct 4. The arrangement 100 further comprises a grounding device 10 for interconnecting the tubing 2, the duct 4 and the coupling element 6. The grounding device 10 may be configured as disclosed in figure 1a-c, 2a-b or 3a-b. The local gas extractor arrangement 100 may also comprise a support arm arrangement 120 for holding the tubing 2.

The duct 4 may comprise a damper device, a nozzle device or a connection to a pump device. The duct 4 may be configured to be arranged at a first end of the tubing 2, the first end being the end where the gas/debris is entering the tubing 2. Alternatively, the duct 4 may be configured to be arranged at a second end of the tubing 2, the second end being closest to/connected to a pump device. According to another example, the duct 4 may be configured to be arranged somewhere between the first end and the second end of the tubing 2.

The tubing 2 may be a flexible tubing. Alternatively, the tubing 2 may be rigid or semi rigid. The tubing 2 may be a dissipative tubing. The tubing 2 may comprise plastics, such as a polymeric material. In one example, the tubing 2 comprises polyurethane or more specifically an ether-based polyurethane. The tubing 2 may comprise a helix of metal wire (wire spiral) arranged circumferentially along at least a part of the length of the tubing 2. The metal helix and thus the metal wire 3 may comprise stainless steel. The tubing 2 may also be referred to as a hose or a duct hose.

The coupling element 6 may be referred to as a hose clamp or band clamp. The coupling element 6 may thus comprise a strap or a band. The coupling element 6 is configured to surround/encircle the tubing 2 and the duct 4.

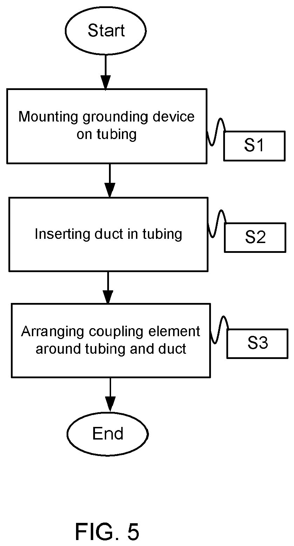

Figure 5 shows a diagram over a method for mounting a grounding device 10 of a local gas extractor arrangement 100 according to an example of the present disclosure. The local gas extractor arrangement 100 may be configured as disclosed in Figure 4. The gas extractor arrangement 100 thus comprises a tubing 2 with a metal wire 3; a conductive duct 4 at least partly inserted into the tubing 2; a coupling element 6 arranged to connect the tubing 2 and the duct 4; and a grounding device 10 as disclosed in figure 1a-c, 2a-b or 3a-b.

The method comprises the steps of mounting S1 the grounding device 10 on the tubing 2, such that a part of the metal wire 3 of the tubing 2 is interacting with the head section 20 of the grounding device 10; inserting S2 a part of the duct 4 inside the tubing 2 in abutment with the connection section 30 of the grounding device 10; and arranging S3 the coupling element 6 around the tubing 2 and the duct 4, in abutment with the connection section 30 of the grounding device 10.

The step of mounting S1 the grounding device 10 on the tubing 2 may comprise exposing a part of the metal wire 3 of the tubing 2, and mounting the grounding device 10 with at least a part of the exposed wire 3 inserted into the head section 20 of the grounding device 10. Exposing a part of the metal wire 3 means stripping off the plastic tubing wall from the metal wire 3. section.

The step of mounting S1 the grounding device 10 on the tubing 2 may also comprise positioning the grounding device 10, such that the first leg 32 is arranged inside the tubing 2 and the second leg 34 is arranged outside the tubing 2.

The step of mounting S1 the grounding device 10 on the tubing 2 may comprise positioning the grounding device 10, such that an inner surface 33' of the first leg 32 abuts or faces an inner wall of the tubing 2, and an outer surface 33" of the first leg 32 abuts an outer wall of the duct 4, and such that an inner surface 35' of the second leg 34 abuts or faces the outer wall of the tubing 2 and an outer surface 35" of the second leg abuts the coupling element 6.

The step of mounting S1 the grounding device 10 on the tubing 2 may further comprise deforming the head section 20 of the grounding device 10 when the metal wire 3 is positioned inside the head section 20, such that the metal wire 3 is clamped inside the head section 20. The deformation of the head section 20 may be performed by means of tongs or any other handheld clamping tool.

The step of mounting S1 the grounding device 10 on the tubing 2 may further comprise applying a force on the second leg 34 of the connection section 30 to clamp the grounding device 10 on the tubing 2. Thus, the step may comprise displacing the second leg in direction towards the first leg, and thereby ensure that the grounding device 10 is firmly attached on the tubing 2. The displacement of the second leg 34 may be performed by means of tongs or any other handheld clamping tool.

The step of arranging S3 the coupling element 6 around the tubing 2 and the duct 4 may comprise tightening the coupling element 6, such that the connection section 30 of the grounding element 10 is clamped on the tubing 2. More specifically, the step of arranging S3 the coupling element 6 around the tubing 2 and the duct 4 may comprise tightening the coupling element 6, such that it applies a force on the second leg 34 of the connection section 30 and presses the second leg 34 against the tubing 2.

The step of arranging S3 the coupling element 6 around the tubing 2 and the duct 4 may comprise arranging the coupling element 6, such that a part of the coupling element 6 is retained by a retaining portion 36 of the connection section 30 of the grounding device 10. As an example, the step of arranging S3 the coupling element 6 around the tubing 2 and the duct 4 comprises inserting the coupling element 6 through a through hole 38 of the second leg 34 of the connection section 30 of the grounding device 10.

## Claims

1. A local gas extractor arrangement (100) comprising:
a tubing (2) comprising a metal wire (3);
a conductive duct (4) at least partly inserted into the tubing (2);
a coupling element (6) arranged to connect the tubing (2) and the duct (4); and
a grounding device (10) configured to interconnect the tubing (2), the conductive duct (4) and the coupling element (6) to divert static electricity, the grounding device (10) comprising a conductive body with a head section (20) and a connection section (30),
wherein the grounding device (10) is arranged such that a part of the metal wire (3) of the tubing (2) is interacting with the head section (20) of the grounding device (10) and such that the connection section (30) is arranged on the tubing (2) in abutment with the duct (4) and the coupling element (6).

2. The local gas extractor arrangement (100) according to claim 1, wherein the connection section (30) of the grounding device (10) comprises a first leg (32) and a second leg (34), arranged on opposite sides of the tubing wall.

3. The local gas extractor arrangement (100) according to claim 2, wherein the first leg (32) is arranged on an inside of the tubing (2) and in abutment with a part of the duct (4) inserted into the tubing (2), and wherein the second leg (34) is arranged on an outside of the tubing (2) in abutment with the coupling element (6).

4. The local gas extractor arrangement (100) according to claim 2 or 3, wherein the second leg (34) comprises a retaining portion (36) for retaining the coupling element (6).

5. The local gas extractor arrangement (100) according to claim 4, wherein the retaining portion (36) comprises a through hole (38) in the second leg (34).

6. The local gas extractor arrangement (100) according to any one of the preceding claims, wherein the head section (20) comprises an aperture (22) for receiving the metal wire (3).

7. The local gas extractor arrangement (100) according any one of the preceding claims, wherein the head section (20) at least partly encircles a part of the metal wire (3).

8. A method for mounting a grounding device of a local gas extractor arrangement (100), the local gas extractor arrangement (100) comprising a tubing (2) with a metal wire (3), the tubing (2) being connectable to a pump device to extract gas through the tubing (2); a conductive duct (4) at least partly inserted into the tubing (2); a coupling element (6) arranged to connect the tubing (2) and the duct (4); and a grounding device (10) configured to interconnect the tubing (2), the conductive duct (4) and the coupling element (6) to divert static electricity, the grounding device (10) comprising a conductive body with a head section (20) and a connection section (30), the method comprising the steps of:
- mounting (S1) the grounding device (10) on the tubing (2), such that a part of the metal wire (3) of the tubing (2) is interacting with the head section (20) of the grounding device (10);
- inserting (S2) a part of the duct (4) inside the tubing (2) in abutment with the connection section (30) of the grounding device (10); and
- arranging (S3) the coupling element (6) around the tubing (2) and the duct (4), in abutment with the connection section (30) of the grounding device (10).

9. The method according to claim 8, wherein the step of mounting (S1) the grounding device (10) on the tubing (2) comprises exposing a part of the metal wire (3) of the tubing (2) and mounting the grounding device (10) with at least a part of the exposed wire (3) inserted inside the head section (20) of the grounding device (10).

10. The method according to claim 9, wherein the step of mounting (S1) the grounding device (10) on the tubing (2) comprises deforming the head section (20) of the grounding device (10) when the metal wire (3) is positioned inside the head section (20), such that the metal wire (3) is clamped by the head section (20).

11. The method according to any one of claim 8-10, wherein the step of arranging (S3) the coupling element (6) around the tubing (2) and the duct (4) comprises tightening the coupling element (6) such that the connection section (30) of the grounding device (10) is clamped on the tubing (2).

12. The method according to any one of claim 8-11, wherein the step of arranging (S3) the coupling element (6) around the tubing (2) and the duct (4) comprises arranging the coupling element (6), such that a part of the coupling element (6) is retained by a retaining portion (36) of the connection section (30) of the grounding device (10).

## Patentansprüche

1. Lokale Gasextraktoranordnung (100), umfassend:
ein Rohr (2), umfassend einen Metalldraht (3);
einen leitfähigen Kanal (4), der zumindest teilweise in das Rohr (2) eingeführt ist;
ein Kupplungselement (6), das dazu angeordnet ist, das Rohr (2) und den Kanal (4) zu verbinden; und
eine Erdungsvorrichtung (10), die dazu konfiguriert ist, das Rohr (2), den leitfähigen Kanal (4) und das Kupplungselement (6) miteinander zu verbinden, um statische Elektrizität abzuleiten, wobei die Erdungsvorrichtung (10) einen leitfähigen Körper mit einem Kopfabschnitt (20) und einem Verbindungsabschnitt (30) umfasst,
wobei die Erdungsvorrichtung (10) derart angeordnet ist, dass ein Teil des Metalldrahtes (3) des Rohrs (2) mit dem Kopfabschnitt (20) der Erdungsvorrichtung (10) interagiert und dass der Verbindungsabschnitt (30) auf dem Rohr (2) anliegend an den Kanal (4) und das Kupplungselement (6) angeordnet ist.

2. Lokale Gasextraktoranordnung (100) nach Anspruch 1, wobei der Verbindungsabschnitt (30) der Erdungsvorrichtung (10) einen ersten Schenkel (32) und einen zweiten Schenkel (34) umfasst, die auf gegenüberliegenden Seiten der Rohrwand angeordnet sind.

3. Lokale Gasextraktoranordnung (100) nach Anspruch 2, wobei der erste Schenkel (32) an einer Innenseite des Rohrs (2) und anliegend an einen Teil des Kanals (4), der in das Rohr (2) eingeführt ist, angeordnet ist und wobei der zweite Schenkel (34) an einer Außenseite des Rohrs (2) anliegend an das Kupplungselement (6) angeordnet ist.

4. Lokale Gasextraktoranordnung (100) nach Anspruch 2 oder 3, wobei der zweite Schenkel (34) einen Haltebereich (36) zum Halten des Kupplungselements (6) umfasst.

5. Lokale Gasextraktoranordnung (100) nach Anspruch 4, wobei der Haltebereich (36) eine Durchgangsbohrung (38) in dem zweiten Schenkel (34) umfasst.

6. Lokale Gasextraktoranordnung (100) nach einem der vorhergehenden Ansprüche, wobei der Kopfabschnitt (20) eine Öffnung (22) zum Aufnehmen des Metalldrahts (3) umfasst.

7. Lokale Gasextraktoranordnung (100) nach einem der vorhergehenden Ansprüche, wobei der Kopfabschnitt (20) zumindest teilweise einen Teil des Metalldrahts (3) umgibt.

8. Verfahren zum Montieren einer Erdungsvorrichtung einer lokalen Gasextraktoranordnung (100), wobei die lokale Gasextraktoranordnung (100) Folgendes umfasst: ein Rohr (2) mit einem Metalldraht (3), wobei das Rohr (2) mit einer Pumpvorrichtung verbindbar ist, um Gas durch das Rohr (2) zu extrahieren; einen leitfähigen Kanal (4), der zumindest teilweise in das Rohr (2) eingeführt ist; ein Kupplungselement (6), das dazu angeordnet ist, das Rohr (2) und den Kanal (4) zu verbinden; und eine Erdungsvorrichtung (10), die dazu konfiguriert ist, das Rohr (2), den leitfähigen Kanal (4) und das Kupplungselement (6) miteinander zu verbinden, um statische Elektrizität abzuleiten, wobei die Erdungsvorrichtung (10) einen leitfähigen Körper mit einem Kopfabschnitt (20) und einem Verbindungsabschnitt (30) umfasst, und wobei das Verfahren die folgenden Schritte umfasst:
- Montieren (S1) der Erdungsvorrichtung (10) an dem Rohr (2) derart, dass ein Teil des Metalldrahts (3) des Rohrs (2) mit dem Kopfabschnitt (20) der Erdungsvorrichtung (10) interagiert;
- Einführen (S2) eines Teils des Kanals (4) in das Rohr (2) anliegend an den Verbindungsabschnitt (30) der Erdungsvorrichtung (10); und
- Anordnen (S3) des Kupplungselements (6) rund um das Rohr (2) und den Kanal (4) anliegend an den Verbindungsabschnitt (30) der Erdungsvorrichtung (10).

9. Verfahren nach Anspruch 8, wobei der Schritt des Montierens (S1) der Erdungsvorrichtung (10) an dem Rohr (2) Freilegen eines Teils des Metalldrahts (3) des Rohrs (2) und Montieren der Erdungsvorrichtung (10) mit mindestens einem Teil des freigelegten Drahts (3), der in den Kopfabschnitt (20) der Erdungsvorrichtung (10) eingeführt wird, umfasst.

10. Verfahren nach Anspruch 9, wobei der Schritt des Montierens (S1) der Erdungsvorrichtung (10) an dem Rohr (2) Verformen des Kopfabschnitts (20) der Erdungsvorrichtung (10), wenn der Metalldraht (3) in dem Kopfabschnitt (20) derart positioniert wird, dass der Metalldraht (3) durch den Kopfabschnitt (20) festgeklemmt wird, umfasst.

11. Verfahren nach einem der Ansprüche 8-10, wobei der Schritt des Anordnens (S3) des Kupplungselements (6) rund um das Rohr (2) und den Kanal (4) Festziehen des Kupplungselements (6) derart, dass der Verbindungsabschnitt (30) der Erdungsvorrichtung (10) an dem Rohr (2) festgeklemmt wird, umfasst.

12. Verfahren nach einem der Ansprüche 8-11, wobei der Schritt des Anordnens (S3) des Kupplungselements (6) rund um das Rohr (2) und den Kanal (4) Anordnen des Kupplungselements (6) derart, dass ein Teil des Kupplungselements (6) durch einen Haltebereich (36) des Verbindungsabschnitts (30) der Erdungsvorrichtung (10) gehalten wird, umfasst.

## Revendications

1. Agencement de purgeur de gaz local (100) comprenant :
un tubage (2) comprenant un fil métallique (3) ;
un conduit conducteur (4) inséré au moins partiellement dans le tubage (2) ;
un élément de couplage (6) agencé pour raccorder le tubage (2) et le conduit (4) ; et
un dispositif de mise à la terre (10) configuré pour interconnecter le tubage (2), le conduit conducteur (4) et l'élément de couplage (6) pour dévier l'électricité statique, le dispositif de mise à la terre (10) comprenant un corps conducteur avec une section de tête (20) et une section de raccordement (30),
dans lequel le dispositif de mise à la terre (10) est agencé de telle sorte qu'une partie du fil métallique (3) du tubage (2) interagisse avec la section de tête (20) du dispositif de mise à la terre (10) et de telle sorte que la section de raccordement (30) soit agencée sur le tubage (2) en butée avec le conduit (4) et l'élément de couplage (6).

2. Agencement de purgeur de gaz local (100) selon la revendication 1, dans lequel la section de raccordement (30) du dispositif de mise à la terre (10) comprend une première jambe (32) et une seconde jambe (34), agencées sur des côtés opposés de la paroi du tubage.

3. Agencement de purgeur de gaz local (100) selon la revendication 2, dans lequel la première jambe (32) est agencée sur un intérieur du tubage (2) et en butée avec une partie du conduit (4) insérée dans le tubage (2), et dans lequel la seconde jambe (34) est agencée sur un extérieur du tubage (2) en butée avec l'élément de couplage (6).

4. Agencement de purgeur de gaz local (100) selon la revendication 2 ou 3, dans lequel la seconde jambe (34) comprend une partie de retenue (36) pour retenir l'élément de couplage (6).

5. Agencement de purgeur de gaz local (100) selon la revendication 4, dans lequel la partie de retenue (36) comprend un trou traversant (38) dans la seconde jambe (34).

6. Agencement de purgeur de gaz local (100) selon l'une quelconque des revendications précédentes, dans lequel la section de tête (20) comprend une ouverture (22) pour recevoir le fil métallique (3).

7. Agencement de purgeur de gaz local (100) selon l'une quelconque des revendications précédentes, dans lequel la section de tête (20) encercle au moins partiellement une partie du fil métallique (3).

8. Procédé de montage d'un dispositif de mise à la terre d'un agencement de purgeur de gaz local (100), l'agencement de purgeur de gaz local (100) comprenant un tubage (2) avec un fil métallique (3), le tubage (2) pouvant être raccordé à un dispositif de pompe pour extraire du gaz à travers le tubage (2) ; un conduit conducteur (4) inséré au moins partiellement dans le tubage (2) ; un élément de couplage (6) agencé pour raccorder le tubage (2) et le conduit (4) ; et un dispositif de mise à la terre (10) configuré pour interconnecter le tubage (2), le conduit conducteur (4) et l'élément de couplage (6) pour dévier l'électricité statique, le dispositif de mise à la terre (10) comprenant un corps conducteur avec une section de tête (20) et une section de raccordement (30), le procédé comprenant les étapes consistant à :
- réaliser le montage (S1) du dispositif de mise à la terre (10) sur le tubage (2), de telle sorte qu'une partie du fil métallique (3) du tubage (2) interagisse avec la section de tête (20) du dispositif de mise à la terre (10) ;
- réaliser l'insertion (S2) d'une partie du conduit (4) à l'intérieur du tubage (2) en butée avec la section de raccordement (30) du dispositif de mise à la terre (10) ; et
- réaliser l'agencement (S3) de l'élément de couplage (6) autour du tubage (2) et du conduit (4), en butée avec la section de raccordement (30) du dispositif de mise à la terre (10).

9. Procédé selon la revendication 8, dans lequel l'étape consistant à réaliser le montage (S1) du dispositif de mise à la terre (10) sur le tubage (2) comprend l'exposition d'une partie du fil métallique (3) du tubage (2) et le montage du dispositif de mise à la terre (10) avec au moins une partie du fil (3) exposé insérée à l'intérieur de la section de tête (20) du dispositif de mise à la terre (10).

10. Procédé selon la revendication 9, dans lequel l'étape consistant à réaliser le montage (S1) du dispositif de mise à la terre (10) sur le tubage (2) comprend la déformation de la section de tête (20) du dispositif de mise à la terre (10) lorsque le fil métallique (3) est positionné à l'intérieur de la section de tête (20), de telle sorte que le fil métallique (3) soit pincé par la section de tête (20).

11. Procédé selon l'une quelconque des revendications 8 à 10, dans lequel l'étape consistant à réaliser l'agencement (S3) de l'élément de couplage (6) autour du tubage (2) et du conduit (4) comprend le serrage de l'élément de couplage (6) de telle sorte que la section de raccordement (30) du dispositif de mise à la terre (10) soit pincée sur le tubage (2).

12. Procédé selon l'une quelconque des revendications 8 à 11, dans lequel l'étape consistant à réaliser l'agencement (S3) de l'élément de couplage (6) autour du tubage (2) et du conduit (4) comprend l'agencement de l'élément de couplage (6), de telle sorte qu'une partie de l'élément de couplage (6) soit retenue par une partie de retenue (36) de la section de raccordement (30) du dispositif de mise à la terre (10).
